# EUROPÄISCHE PATENTSCHRIFT

(11) **EP 0 663 928 B1**
(45) Veröffentlichungstag und Bekanntmachung des Hinweises auf die Patenterteilung: **05.03.1997**
(21) Anmeldenummer: 93922853.2
(22) Anmeldetag: 04.10.1993
(51) Int. Cl.: C08G 18/08, C08G 18/10, C09D 175/06

(54) **WASSERVERDÜNNBARE BINDEMITTELZUSAMMENSETZUNGEN UND DEREN VERWENDUNG ZUR FORMULIERUNG VON DICKSCHICHT-BESCHICHTUNGSMATERIALIEN**
WATER-DILUTABLE BINDER COMPOSITIONS AND THEIR USE FOR FORMULATING THICK-FILM COATING MATERIALS
COMPOSITIONS DE LIANTS DILUABLES A L'EAU ET LEUR UTILISATION POUR PREPARER DES MATERIAUX DE REVETEMENT A COUCHE EPAISSE

(30) Priorität: 05.10.1992 AT 1958/92
(43) Veröffentlichungstag der Anmeldung: 26.07.1995
(73) Patentinhaber: Vianova Resins AG, 8402 Werndorf (AT)
(72) Erfinder: STARITZBICHLER, Werner, A-8046 Graz (AT); DWORAK, Gert, A-8010 Graz (AT); BERG, Volkmar, D-76676 Graben (DE); MOLZER, Peter, I-10094 Giaveno (IT)
(86) Internationale Anmeldenummer: AT9300151
(87) Internationale Veröffentlichungsnummer: WO9407932

(56) Entgegenhaltungen:
- EP-A- 0 022 452
- EP-A- 0 308 115
- EP-A- 0 330 139
- EP-A- 0 498 156
- EP-A- 0 548 873
- WO-A-93/01245
- US-A- 4 301 053

## Beschreibung

Die Erfindung betrifft wasserverdünnbare Bindemittelzusammensetzungen auf der Basis von Kombinationen wasserverdünnbarer urethanmodifizierter Polyesterharze mit wäßrigen Polymerdispersionen und gegebenenfalls mit Vernetzungskomponenten, Wachsdispersionen und Entschäumern, sowie deren Verwendung zur Formulierung von Dickschicht-Beschichtungsmaterialien.

Als Unterbodenschutz, Antidröhnbelag u. ä. werden in der Kraftfahrzeugtechnik gegenwärtig vor allem Produkte auf Basis von Polyvinylchlorid (PVC) eingesetzt, welche mit ihrem Eigenschaftsbild alle wesentlichen Anforderungen der Verarbeiter erfüllen. Die Industrie wird jedoch zunehmend dazu angehalten, diese Produkte durch vor allem für die Entsorgung umweltverträglichere Beschichtungsmaterialien zu ersetzen.

Dieser Ersatz ist durch Kombinationen von wasserverdünnbaren urethanmodifizierten Polyesterharzen mit wäßrigen Polymerdispersionen und gegebenenfalls mit Vernetzungskomponenten, Wachsdispersionen und Entschäumern, unter Berücksichtigung bestimmter Auswahlkriterien möglich.

Die Erfindung betrifft demgemäß wasserverdünnbare Bindemittelzusammensetzungen auf der Basis von Kombinationen wasserverdünnbarer urethanmodifizierter Polyesterharze mit wäßrigen Polymerdispersionen und gegebenenfalls zusätzlichen Komponenten, bestehend aus, jeweils bezogen auf den Feststoffgehalt,
(A) 40 bis 90 Gew.-% eines nach vollständiger oder teilweiser Neutralisation der Carboxylgruppen wasserverdünnbaren urethanmodifizierten gesättigten Polyesterharzes, welches erhalten wurde durch die Umsetzung von
   (Aa) 10 bis 80 Gew.-% eines Polyurethanharzes, welches Carboxylgruppen entsprechend einer Säurezahl von 70 bis 160 mg KOH/g und im Molekül mindestens eine endständige blokkierte Isocyanatgruppe, jedoch weder freie Hydroxylgruppen noch Fettsäurereste mit mehr als 12 C-Atomen enthält, und eine Grenzviskositätszahl von 6,5 bis 12,0 ml/g, gemessen in N,N-Dimethylformamid (DMF) bei 20°C, aufweist, mit
   (Ab) 20 bis 90 Gew.-% eines gegebenenfalls urethanmodifizierten gesättigten Polyesterharzes mit einer Hydroxylzahl von 50 bis 500 mg KOH/g, einer Säurezahl von weniger als 20 mg KOH/g und einer Grenzviskositätszahl von 8,0 bis 13,0 ml/g, gemessen in N,N-Dimethylformamid (DMF) bei 20°C,
   wobei die Umsetzung bei einer Temperatur zwischen 90 und 170°C bis zu einer Grenzviskositätszahl von 13,5 bis 18,0 ml/g, gemessen in N,N-Dimethylformamid (DMF) bei 20°C, geführt wurde,
(B) 10 bis 60 Gew.-% einer wäßrigen Polymerdispersion auf der Basis von chlorfreien Copolymerisaten aus (Meth)acrylsäureestern und/oder Styrol und/oder Butadien mit einer mittleren Teilchengröße von 200 bis 800 nm und einer Oberflächenladung von 100 bis 500 µMol/g,
sowie, bezogen auf die Mischung von (A) mit (B),
(C) 0 bis 40 Gew.-% einer Vernetzungskomponente auf der Basis eines Aminoharzes und/oder eines blokkierten Polyisocyanats,
(D) 0 bis 40 Gew.-% einer wäßrigen Wachsdispersion auf der Basis von Polyethylen und/oder Polypropylen und/oder Naturwachsen mit einer mittleren Teilchengröße von 200 bis 800 nm und einer Oberflächenladung von 100 bis 500 µMol/g und
(E) 0 bis 30 Gew.-% eines Schaumreduzierungsmittels auf der Basis eines Fettsäureoligoesters mit einer Säurezahl von weniger als 10 mg KOH/g.

Die Erfindung betrifft weiters die Verwendung dieser Bindemittelzusammensetzungen, zusammen mit Pigmenten, Füllstoffen und Lackhilfsmitteln, zur Formulierung von wäßrigen Dickschicht-Beschichtungsmaterialien, insbesonders von Produkten für den Unterbodenschutz oder für Antidröhnbeschichtungen von Kraftfahrzeugen.

Als wasserverdünnbares urethanmodifiziertes Polyesterharz (A) werden Produkte eingesetzt, wie sie in der AT-B-396 245 beschrieben sind. Es handelt sich dabei um nach vollständiger oder teilweiser Neutralisation wasserverdünnbare urethanmodifizierte Polyesterharze, die durch eine partielle Umsetzung eines Carboxylgruppen und blockierte Isocyanatgruppen aufweisenden Polyurethanharzes mit einem Hydroxylgruppen tragenden, gegebenenfalls urethanmodifizierten Polyesterharz erhalten werden.

Diese Bindemittel bringen besonders interessante lacktechnische Eigenschaften für Dickschicht-Beschichtungsmaterialien ein, wie eine verbesserte Haftung auf ETL-Grundierungen, sowie eine Strukturviskosität und eine gute Pigmentierbarkeit.

Als wäßrige Polymerdispersion (B) werden Handelsprodukte verwendet, die als wesentliche Rohstoffkomponenten (Meth)acrylsäureester und/oder Styrol und/oder Butadien enthalten. Anspruchsgemäß werden dabei Polymerdispersionen ausgewählt, die eine mittlere Teilchengröße von 200 bis 800 nm und eine Oberflächenladung von 100 bis 500 µMol/g aufweisen. Durch diese Auswahlkriterien ist einerseits eine gute Verträglichkeit mit der Komponente (A) gegeben, andererseits wird aufgrund der hohen Scherstabilität die einwandfreie Einarbeitung von Pigmenten und Füllstoffen sichergestellt.

Weiters können die erfindungsgemäßen Bindemittelzusammensetzungen folgende Komponenten enthalten:

Soferne das urethanmodifizierte Polyesterharz (A) selbst nicht über ein ausreichendes Maß an vernetzenden Gruppen verfügt, ist die Mitverwendung zusätzlicher Vernetzungskomponenten (C) erforderlich. Dafür können entweder Aminoharze, wie Melamin-, Harnstoff-, Benzoguanamin-Formaldehyd-Kondensate, verschiedener Reaktivität oder blockierte Polyisocyanatverbindungen eingesetzt werden.

Zur Verhinderung des Absetzens von Pigmenten und Füllstoffen ist es vorteilhaft, daß die Bindemittelzusammensetzung gegebenenfalls eine handelsübliche wäßrige Wachsdispersion (D) auf der Basis von Polyethylen und/oder Polypropylen und/oder Naturwachsen enthält. Vorzugsweise werden Wachsdispersionen auf Basis von oxidierten Polyethylenen eingesetzt, welche eine mittlere Teilchengröße von 200 bis 800 nm und eine Oberflächenladung von 100 bis 500 µMol/g aufweisen.

Gegebenenfalls enthalten die Bindemittelzusammensetzungen ein handelsübliches Schaumreduzierungsmittel (E) auf Basis eines Fettsäure-Oligoesters mit einer Säurezahl von weniger als 10 mg KOH/g.

Die Bindemittelzusammensetzungen bestehen erfindungsgemäß aus folgenden Komponenten, jeweils bezogen auf den Feststoffgehalt:
- Komponente (A): 40 bis 90 Gew.-%, vorzugsweise
60 bis 80 Gew.-%
- Komponente (B): 10 bis 60 Gew.-%, vorzugsweise
20 bis 40 Gew.-%
sowie, bezogen auf die Mischung von (A) und (B),
- Komponente (C): 0 bis 40 Gew.-%, vorzugsweise
15 bis 30 Gew.-%
- Komponente (D): 0 bis 40 Gew.-%, vorzugsweise
10 bis 30 Gew.-%
- Komponente (E): 0 bis 30 Gew.-%, vorzugsweise
10 bis 20 Gew.-%.

Die mit den erfindungsgemäßen Bindemittelzusammensetzungen formulierten Dickschicht-Beschichtungsmaterialien enthalten meist Pigmente, Füllstoffe und gegebenenfalls Lackhilfsmittel.

Als Pigmente werden üblicherweise Titandioxid und Ruß, als Füllstoffe vorzugsweise Talkum, Calcit, Aluminiumoxihydrat und feines Gummimehl, etwa aus recyclierten Autoreifen, eingesetzt. Die Kornfeinheit sollte unter 500 µm liegen. Eine entsprechende Auswahl der Füllstoffe bezüglich ihrer Form (kugelig, faserig, röhrenförmig etc.) kann überdies die Verdunstung des Verdünnungswassers begünstigen.

Die Menge der eingesetzten Pigmente bzw. Füllstoffe richtet sich nach dem Verwendungszweck und liegt zwischen 0 und 500 Gew.-Teilen, bezogen auf 100 Teile Feststoffgehalt der Bindemittelzusammensetzung.

Die Herstellung der Beschichtungsmassen und ihre Verarbeitung erfolgt nach bekannten Methoden.

Die folgenden Beispiele erläutern die Erfindung, ohne sie in ihrem Umfang zu beschränken. Alle Angaben in Teilen oder Prozenten beziehen sich, soferne nichts anderen angegeben ist, auf Gewichtseinheiten.

### 1. Bindemittelzusammensetzungen (Beispiele 1 bis 5) und damit formulierte Unterbodenschutzmassen

- Komponente (A1):: Wasserverdünnbarer, urethanmodifizierter, gesättigter Polyester, Lieferform: 35%ig in Wasser, neutralisiert mit Dimethylethanolamin (RESYDROL® VWA 5490/35, Hersteller: VIANOVA KUNSTHARZ AG, AT).
- Komponente (A2):: Wasserverdünnbarer, urethanmodifizierter, gesättigter Polyester gemäß AT-B-396 245 (A-1400/91), Beispiel I/4 (Herstellung siehe weiter unten).
- Komponente (B1):: Wäßrige Polymerdispersion auf der Basis von Acrylsäureestern, Feststoffgehalt: ca. 60 %, (MOWITON® VDM 3750, Hersteller: HOECHST AG, DE).
- Komponente (B2):: Wäßrige Polymerdispersion auf der Basis eines carboxylgruppenhaltigen Styrol-Butadien-Copolymerisats, Feststoffgehalt: ca. 50 % (LIPATON® X5521, Hersteller: HÜLS AG, DE).
- Komponente (C1):: Hexamethoxymethylmelamin, lösemittelfrei, Feststoffgehalt: ca. 95 % (MAPRENAL® MF 904, Hersteller: HOECHST AG, DE).
- Komponente (C2):: Mit Butanonoxim blockiertes Polyisocyanat (trimeres Hexamethylendiisocyanat mit Biuretstruktur), lösemittelfrei, Feststoffgehalt: 100 % (DESMODUR® N 100, Hersteller: BAYER AG, DE).
- Komponente (D1):: Wäßrige Wachsdispersion auf Basis von Naturwachsen, Feststoffgehalt: ca. 30 % in Wasser (LUBA-print® CA 30, Hersteller: L. P. BADER + CO. GMBH, DE).
- Komponente (E1):: Wasserunlöslicher, oligomerer Fettsäureester, Lieferform: niedrigviskose Flüssigkeit (ADDITOL® VXW 4926, Hersteller: VIANOVA KUNSTHARZ AG, AT).

### Herstellung der Komponente (A2)

### Polycarboxylkomponente

Folgende Abkürzungen werden verwendet:
- DGM: Diethylenglykoldimethylether
- MIBK: Methylisobutylketon
- TDI: Toluylendiisocyanat
(handelsübliches Isomerengemisch mit ca. 80 % 2,4-TDI und ca. 20 % 2,6-TDI)

In einem geeigneten Reaktionsgefäß wird eine Lösung von 810 Tlen (6 Mol) Dimethylolpropionsäure in 946 Tlen DGM und 526 Tlen MIBK vorgelegt. Innerhalb von 4 Stunden wird zu dieser Lösung bei 100°C eine Mischung aus 870 Tlen (5 Mol) TDI und 528 Tlen (2 Mol) eines mit Ethylenglykolmonoethylether halbblockierten TDI gleichzeitig zugegeben. Sobald alle NCO-Gruppen umgesetzt sind, wird der Ansatz mit einer Mischung aus DGM und MIBK (2 : 1) auf einen Feststoffgehalt von 60 % verdünnt. Die Komponente (A1) weist eine Säurezahl von 140 mg KOH/g und eine Grenzviskositätszahl, gemessen in N,N-Dimethylformamid (DMF) bei 20°C, von 9,3 ml/g auf.

Das halbblockierte TDI wird durch Zugabe von 90 Tlen (1 Mol) Ethylenglykolmonoethylether zu 174 Tlen (1 Mol) TDI innerhalb von 2 Stunden bei 30°C und anschließender Reaktion bis zu einem NCO-Wert von 16 bis 17 % hergestellt.

### Polyhydroxylkomponente

259 Tle (1,35 Mol) Tripropylenglykol, 25 Tle (0,15 Mol) Isophthalsäure und 97 Tle (0,5 Mol) Trimellithsäureanhydrid werden in Gegenwart von 0,2 Tlen Dibutylzinndilaurat bei 220°C bis zu einer Säurezahl von 15 mg KOH/g verestert. Die Viskosität nach DIN 53211/20°C einer 50%igen Lösung in Ethylenglykolmonobutylether beträgt 60 Sekunden. Die Grenzviskositätszahl, gemessen in N,N-Dimethylformamid (DMF) bei 20°C, beträgt 11,4 ml/g.

### Komponente (A2)

Die Polycarboxylkomponente und die Polyhydroxylkomponente werden im Verhältnis 23 : 77 Teile (bezogen auf den Feststoffgehalt) miteinander gemischt. Das Lösungsmittel wird während des Aufheizens auf 150 - 160°C unter Vakuum weitgehend entfernt. Diese Reaktionstemperatur wird gehalten, bis eine Säurezahl von ca. 35 mg/KOH und eine Grenzviskositätszahl von ca. 15,5 ml/g, gemessen in N,N-Dimethylformamid (DMF) bei 20°C erreicht worden ist, wobei eine Probe nach der Neutralisation mit Dimethylethanolamin einwandfrei wasserverdünnbar ist.

Die Komponente (A2) wird bei 40 - 100°C mit der Komponente (C2) gemischt und mit Dimethylethanolamin auf einen Neutralisationsgrad von ca. 90 % eingestellt. Es ist auch möglich, das Reaktionsprodukt vor der Zugabe der Komponente (C2) zu neutralisieren. Anschließend wird mit deionisiertem Wasser auf den gewünschten Feststoffgehalt, z.B. 35 Gew.-%, verdünnt.

Die Bindemittelzusammensetzungen werden durch Mischen der Komponenten hergestellt, wobei die Komponenten (C) und (E) zuerst in die Komponente (A) eingemischt werden, bevor über die Komponente (B) und gegebenenfalls über die Komponente (D) weitere Anteile an Wasser in die Bindemittelzusammensetzung eingebracht werden.

Die Mengenverhältnisse und Kennzahlen sind in der Tabelle 1 zusammengefaßt.

Die Unterbodenschutzmassen werden entsprechend den Rezepturen in Tabelle 1 zusammen mit den erforderlichen Mengen an Verdünnungswasser und Dimethylethanolamin zur Nachstellung des pH-Werts am Dissolver hergestellt. Die Kennzahlen der Unterbodenschutzmassen sind ebenfalls in Tabelle 1 zusammengefaßt.

### 2. Lacktechnische Prüfung der Unterbodenschutzmassen

Die pastösen Unterbodenschutzmassen werden mit einer Aufziehrakel auf grundierte Bleche (kathodisch abscheidbare ETL-Grundierung, 20 min 180°C) in Trockenfilmstärken von ca. 200 µm aufgebracht. Nach einer Vortrocknung von 5 min bei 100°C wird die Klebfreiheit beurteilt, anschließend werden die Filme 20 min bei 165°C gehärtet.

**Tabelle 1**

| | | | | | |
|---|---|---|---|---|---|
| Beispiele 1 bis 5 (Bindemittelzusammensetzungen, Rezepturen und Kennzahlen der Unterbodenschutzmassen) | | | | | |

| Bindemittelkomponenten | Beispiel | | | | |
|---|---|---|---|---|---|
| | 1 | 2 | 3 | 4 | 5 |
| Mischung | | | | | |
| (A2) : (C2) = 65 : 25 | 70 | 60 | 60 | 55 | |
| (A1) | | | | | 55 |
| (B1) | 30 | 30 | 30 | 25 | |
| (B2) | | | | | 30 |
| (C1) | | | | | 15 |
| (D1) | | | | 20 | |
| (E1) | | 10 | 10 | | |
| Titandioxid Rutiltyp | 50 | 50 | 50 | 50 | 50 |
| Millicarb | 150 | 200 | 150 | | 50 |
| Mikrotalkum | 20 | 20 | 10 | 30 | 30 |
| Gumminehl | | | 40 | 40 | |
| Ruß | 0,2 | 0,2 | | | 0,2 |
| Pigment/Bindemittel | 1/2,2 | 1/2,7 | 1/2,5 | 1/1,2 | 1/1,3 |
| Feststoffgehalt in Gew.-% | 70 | 76 | 75 | 59 | 61 |
| pH-Wert (10%ig in Wasser) | 8,4 | 8 | 8 | 7,8 | 8,2 |
| Viskosität | pastös | pastös | pastös | pastös | pastös |

### Prüfmethoden

### Klebfreiheit:

Prüfung mit der Zeigefingerkuppe, 1 = klebfrei, 5 = noch völlig klebrig.

### Steinschlagtest:

Das Prüfblech wird auf einer Fläche von 85 x 75 mm mit 1 kg Stahlschrott (kantig, 4 bis 5 mm) unter einem Druck von ca. 3.10⁵ Pa beschossen, Kennzahlen 1 (keine Absplitterungen) bis 10 (Totalablösung). Nach der ersten Bewertung wird das Prüfblech 240 Stunden in einer Feuchtkammer bei 40°C und 100 % relativer Luftfeuchtigkeit gelagert und anschließend noch einmal unter denselben Bedingungen beschossen, siehe 2. Bewertung.

Als Vergleichsbeispiel wurde ein handelsüblicher PVC-Unterbodenschutz herangezogen.

**Tabelle 2**

| | | | |
|---|---|---|---|
| Ergebnisse der lacktechnischen Ausprüfung von Unterbodenschutzmassen | | | |

| Beispiel Nr. | Kleber | Steinschlag | |
|---|---|---|---|
| | | 1. Bewertung | 2. Bewertung |
| Beispiel 1 | 1 - 2 | 1 | 2 |
| Beispiel 2 | 2 | 2 | 2 - 3 |
| Beispiel 3 | 1 | 1 | 1 |
| Beispiel 4 | 1 | 2 | 3 |
| Beispiel 5 | 2 - 3 | 2 | 3 |
| Vergleich | 1 | 1 | 2 - 3 |

## Patentansprüche

1. Wasserverdünnbare Bindemittelzusammensetzungen auf der Basis von Kombinationen wasserverdünnbarer urethanmodifizierter Polyesterharze mit wäßrigen Polymerdispersionen und gegebenenfalls zusätzlichen Komponenten, bestehend aus, jeweils bezogen auf den Feststoffgehalt,
(A) 40 bis 90 Gew.-% eines nach vollständiger oder teilweiser Neutralisation der Carboxylgruppen wasserverdünnbaren, urethanmodifizierten, gesättigten Polyesterharzes, welches erhalten wurde durch die Umsetzung von
(Aa) 10 bis 80 Gew.-% eines Polyurethanharzes, welches Carboxylgruppen entsprechend einer Säurezahl von 70 bis 160 mg KOH/g und im Molekül mindestens eine endständige blockierte Isocyanatgruppe, jedoch weder freie Hydroxylgruppen noch Fettsäurereste mit mehr als 12 C-Atomen enthält, und eine Grenzviskositätszahl von 6,5 bis 12,0 ml/g, gemessen in N,N-Dimethylformamid (DMF) bei 20°C, aufweist, mit
(Ab) 20 bis 90 Gew.-% eines gegebenenfalls urethanmodifizierten, gesättigten Polyesterharzes mit einer Hydroxylzahl von 50 bis 500 mg KOH/g, einer Säurezahl von weniger als 20 mg KOH/g und einer Grenzviskositätszahl von 8,0 bis 13,0 ml/g, gemessen in N,N-Dimethylformamid (DMF) bei 20°C,
wobei die Umsetzung bei einer Temperatur zwischen 90 und 170°C bis zu einer Grenzviskositätszahl von 13,5 bis 18,0 ml/g, gemessen in N,N-Dimethylformamid (DMF) bei 20°C, geführt wurde,
(B) 10 bis 60 Gew.-% einer wäßrigen Polymerdispersion auf der Basis von chlorfreien Copolymerisaten aus (Meth)acrylsäureestern und/ oder Styrol und/ oder Butadien mit einer mittleren Teilchengröße von 200 bis 800 nm und einer Oberflächenladung von 100 bis 500 µMol/g,
sowie, bezogen auf die Mischung von (A) mit (B),
(C) 0 bis 40 Gew.-% einer Vernetzungskomponente auf der Basis eines Aminoharzes und/oder eines blockierten Polyisocyanats,
(D) 0 bis 40 Gew.-% einer wäßrigen Wachsdispersion auf der Basis von Polyethylen und/oder Polypropylen und/oder Naturwachsen mit einer mittleren Teilchengröße von 200 bis 800 nm und einer Oberflächenladung von 100 bis 500 µMol/g und
(E) 0 bis 30 Gew.-% eines Schaumreduzierungsmittels auf der Basis eines Fettsäureoligoesters mit einer Säurezahl von weniger als 10 mg KOH/g.

2. Wasserverdünnbare Bindemittelzusammensetzungen gemäß Anspruch 1, bestehend aus, jeweils bezogen auf den Feststoffgehalt,
(A) 60 bis 80 Gew.-% eines nach vollständiger oder teilweiser Neutralisation der Carboxylgruppen wasserverdünnbaren, urethanmodifizierten, gesättigten Polyesterharzes, welches erhalten wurde durch die Umsetzung von
(Aa) 15 bis 40 Gew.-% eines Polyurethanharzes, welches Carboxylgruppen entsprechend einer Säurezahl von 70 bis 160 mg KOH/g und im Molekül mindestens eine endständige blockierte Isocyanatgruppe, jedoch weder freie Hydroxylgruppen noch Fettsäurereste mit mehr als 12 C-Atomen enthält, und eine Grenzviskositätszahl von 8,0 bis 11,0 ml/g, gemessen in N,N-Dimethylformamid (DMF) bei 20°C, aufweist, mit
(Ab) 60 bis 85 Gew.-% eines gegebenenfalls urethanmodifizierten, gesättigten Polyesterharzes mit einer Hydroxylzahl von 50 bis 500 mg KOH/g, einer Säurezahl von weniger als 20 mg KOH/g und einer Grenzviskositätszahl von 9,5 bis 12,0 0 ml/g, gemessen in N,N-Dimethylformamid (DMF) bei 20°C,
wobei die Umsetzung bei einer Temperatur, die 10 bis 20°C über der Abspaltungstemperatur des Blockierungsmittels für die endständigen Isocyanatgruppen der Komponente (Aa) liegt, bis zu einer Grenzviskositätszahl von 14,5 bis 16,5 ml/g, gemessen in N,N-Dimethylformamid (DMF) bei 20°C, geführt wurde,
(B) 20 bis 40 Gew.-% einer wäßrigen Polymerdispersion auf der Basis von chlorfreien Copolymerisaten aus (Meth)acrylsäureestern und/oder Styrol und/ oder Butadien mit einer mittleren Teilchengröße von 200 bis 800 nm und einer Oberflächenladung von 100 bis 500 µMol/g,
sowie, bezogen auf die Mischung von (A) mit (B),
(C) 15 bis 30 Gew.-% einer Vernetzungskomponente auf der Basis eines Aminoharzes und/oder eines blockierten Polyisocyanats,
(D) 10 bis 30 Gew.-% einer wäßrigen Wachsdispersion auf der Basis von Polyethylen und/oder Polypropylen und/oder Naturwachsen mit einer mittleren Teilchengröße von 200 bis 800 nm und einer Oberflächenladung von 100 bis 500 µMol/g und
(E) 10 bis 20 Gew.-% eines Schaumreduzierungsmittels auf der Basis eines Fettsäureoligoesters mit einer Säurezahl von weniger als 10 mg KOH/g.

3. Verwendung der Bindemittelzusammensetzungen gemäß den Ansprüchen 1 und 2, zusammen mit Pigmenten, Füllstoffen und Lackhilfsmitteln, zur Formulierung von wäßrigen Dickschicht-Beschichtungsmaterialien, insbesonders von Produkten für den Unterbodenschutz oder für Antidröhnbeschichtungen von Kraftfahrzeugen.

## Claims

1. Water-dilutable binder compositions based on combinations of water-dilutable, urethane-modified polyester resins with aqueous polymer dispersions and, if desired, additional components, which comprise - based in each case on the solids content -
(A) from 40 to 90% by weight of a urethane-modified, saturated polyester resin which is dilutable in water after complete or partial neutralization of the carboxyl groups, and which has been obtained by reacting
(Aa) from 10 to 80% by weight of a polyurethane resin which contains carboxyl groups corresponding to an acid number of from 70 to 160 mg of KOH/g and contains in the molecule at least one terminal blocked isocyanate group, but contains neither free hydroxyl groups nor fatty acid radicals with more than 12 carbon atoms, and has an intrinsic viscosity of from 6.5 to 12.0 ml/g measured in N,N-dimethylformamide (DMF) at 20°C, with
(Ab) from 20 to 90% by weight of an optionally urethane-modified, saturated polyester resin having a hydroxyl number of from 50 to 500 mg of KOH/g, an acid number of less than 20 mg of KOH/g and an intrinsic viscosity of from 8.0 to 13.0 ml/g measured in N,N-dimethylformamide (DMF) at 20°C,
the reaction being carried out at a temperature of between 90 and 170°C up to an intrinsic viscosity of from 13.5 to 18.0 ml/g measured in N,N-dimethylformamide (DMF) at 20°C,
(B) from 10 to 60% by weight of an aqueous polymer dispersion based on chlorine-free copolymers of (meth)acrylic esters and/or styrene and/or butadiene having an average particle size of from 200 to 800 nm and a surface charge of from 100 to 500 µmol/g,
and, based on the mixture of (A) with (B),
(C) from 0 to 40% by weight of a crosslinking component based on an amino resin and/or a blocked polyisocyanate,
(D) from 0 to 40% by weight of an aqueous wax dispersion based on polyethylene and/or polypropylene and/or natural waxes having an average particle size of from 200 to 800 nm and a surface charge of from 100 to 500 µmol/g, and
(E) from 0 to 30% by weight of an antifoam based on a fatty acid oligoester, having an acid number of less than 10 mg of KOH/g.

2. Water-dilutable binder compositions according to Claim 1, which comprise - based in each case on the solids content -
(A) from 60 to 80% by weight, of a urethane-modified, saturated polyester resin which is dilutable in water after complete or partial neutralization of the carboxyl groups, and which has been obtained by reacting
(Aa) from 15 to 40% by weight of a polyurethane resin which contains carboxyl groups corresponding to an acid number of from 70 to 160 mg of KOH/g and contains in the molecule at least one terminal blocked isocyanate group, but contains neither free hydroxyl groups nor fatty acid radicals with more than 12 carbon atoms, and has an intrinsic viscosity of from 8.0 to 11.0 ml/g measured in N,N-dimethylformamide (DMF) at 20°C, with
(Ab) from 60 to 85% by weight of an optionally urethane-modified, saturated polyester resin having a hydroxyl number of from 50 to 500 mg of KOH/g, an acid number of less than 20 mg of KOH/g and an intrinsic viscosity of from 9.5 to 12.0 ml/g, measured in N,N-dimethylformamide (DMF) at 20°C,
the reaction being carried out at a temperature which is from 10 to 20°C above the temperature at which the blocking agent is eliminated from the terminal isocyanate groups of component (Aa), up to an intrinsic viscosity of from 14.5 to 16.5 ml/g, measured in N,N-dimethylformamide (DMF) at 20°C,
(B) from 20 to 40% by weight of an aqueous polymer dispersion based on chlorine-free copolymers of (meth)acrylic esters and/or styrene and/or butadiene having an average particle size of from 200 to 800 nm and a surface charge of from 100 to 500 µmol/g,
and, based on the mixture of (A) with (B),
(C) from 15 to 30% by weight of a crosslinking component based on an amino resin and/or a blocked polyisocyanate,
(D) from 10 to 30% by weight of an aqueous wax dispersion based on polyethylene and/or polypropylene and/or natural waxes having an average particle size of from 200 to 800 nm and a surface charge of from 100 to 500 µmol/ g, and
(E) from 10 to 20% by weight of an antifoam based on a fatty acid oligoester, having an acid number of less than 10 mg of KOH/g.

3. Use of the binder compositions according to Claims 1 and 2, together with pigments, fillers and paint auxiliaries, for formulating aqueous thick-film coating materials, especially products for underbody protective coatings or for anti-resonance coatings on motor vehicles.

## Revendications

1. Compositions de liants diluables à l'eau à base de combinaisons de résines de polyesters modifiées par de l'uréthanne, diluables à l'eau, avec des dispersions aqueuses de polymères et, éventuellement avec des composants additionnels, constituées, chaque fois par rapport aux taux de solides, par
(A) 40 à 90% en poids d'une résine de polyester saturée modifiée par de l'uréthanne, diluable à l'eau après neutralisation totale ou partielle des groupes carboxyles, qui a été obtenue par la réaction
(Aa) de 10 à 80% en poids d'une résine de polyuréthanne qui contient des groupes carboxyles correspondant à un indice d'acide de 70 à 160 mg de KOH/g et au moins un groupe isocyanate bloqué en bout de chaîne dans la molécule, mais ne contient ni groupes hydroxyles libres, ni restes d'acides gras avec plus de 12 atomes de C et qui présente un indice de viscosité limite de 6,5 à 12,0 ml/g, mesuré dans le N,N-diméthylformamide (DMF) à 20°C, avec
(Ab) 20 à 90% en poids d'une résine de polyester saturée, éventuellement modifiée par de l'uréthanne ayant un indice d'hydroxyle de 50 à 500 mg de KOH/g, un indice d'acide inférieur à 20 mg de KOH/g et un indice de viscosité limité de 8,0 à 13,0 ml/g, mesuré dans le N,N-diméthylformamide (DMF) à 20°C,
la réaction ayant été conduite à une température entre 90 et 170°C jusqu'à un indice de viscosité limite de 13,5 à 18,0 ml/g, mesuré dans le N,N-diméthylformamide (DMF) à 20°C,
B) 10 à 60% en poids d'une dispersion aqueuse de polymère à base de copolymères exempts de chlore obtenus à partir d'esters (méth)acryliques et/ou de styrène et/ou de butadiène avec une taille moyenne de particule de 200 à 800 nm et une charge superficielle de 100 à 500 µmoles/g, ainsi que, par rapport au mélange de (A) avec (B), par
C) 0 à 40% en poids d'un composant réticulant à base d'une résine aminoplaste et/ou d'un polyisocyanate bloqué,
D) 0 à 40% en poids d'une dispersion aqueuse de cire à base de polyéthylène et/ou de polypropylène et/ou de cires naturelles avec une taille moyenne de particule de 200 à 800 nm et une charge superficielle de 100 à 500 µmoles/g et
E) 0 à 30% en poids d'un agent antimousse à base d'un oligoester d'acide gras ayant un indice d'acide inférieur à 10 mg de KOH/g.

2. Compositions de liants diluables à l'eau constituées, chaque fois par rapport aux taux de solides, par
(A) 60 à 80% en poids d'une résine de polyester saturée modifiée par de l'uréthanne, diluable à l'eau après neutralisation totale ou partielle des groupes carboxyles, qui a été obtenue par la réaction
(Aa) de 15 à 40% en poids d'une résine de polyuréthanne qui contient des groupes carboxyles correspondant à un indice d'acide de 70 à 160 mg de KOH/g et au moins un groupe isocyanate bloqué en bout de chaîne dans la molécule, mais ne contient ni groupes hydroxyles libres, ni restes d'acides gras avec plus de 12 atomes de C et qui présente un indice de viscosité limite de 8,0 à 11,0 ml/g, mesuré dans le N,N-diméthylformamide (DMF) à 20°C, avec
(Ab) 60 à 85% en poids d'une résine de polyester saturée, éventuellement modifiée par de l'uréthanne ayant un indice d'hydroxyle de 50 à 500 mg de KOH/g, un indice d'acide inférieur à 20 mg de KOH/g et un indice de viscosité limite de 9,5 à 12,0 ml/g, mesuré dans le N,N-diméthylformamide (DMF) à 20°C,
la réaction ayant été conduite à une température qui se situe à 10-20°C au-dessus de la température de scission de l'agent de blocage pour les groupes isocyanates du composant (Aa), jusqu'à un indice de viscosité limite de 14,5 à 16,5 ml/g, mesuré dans le N,N-diméthylformamide (DMF) à 20°C,
B) 20 à 40% en poids d'une dispersion aqueuse de polymère à base de copolymères exempts de chlore obtenus à partir d'esters (méth)acryliques et/ou de styrène et/ou de butadiène avec une taille moyenne de particule de 200 à 800 nm et une charge superficielle de 100 à 500 µmoles/g, ainsi que, par rapport au mélange de (A) avec (B), par
C) 15 à 30% en poids d'un composant réticulant à base d'une résine aminoplaste et/ou d'un polyisocyanate bloqué,
D) 10 à 30% en poids d'une dispersion aqueuse de cire à base de polyéthylène et/ou de polypropylène et/ou de cires naturelles avec une taille moyenne de particule de 200 à 800 nm et une charge superficielle de 100 à 500 µmoles/g et
E) 10 à 20% en poids d'un agent antimousse à base d'un oligoester d'acide gras ayant un indice d'acide inférieur à 10 mg de KOH/g.

3. Utilisation des compositions de liants selon les revendications 1 et 2, conjointement avec des pigments, des matières de charge et des adjuvants pour peintures, pour la formulation de matières de revêtement aqueuses en couche épaisse, notamment de produits pour la protection de bas de caisse ou pour des revêtements insonorisants pour véhicules automobiles.
